# EUROPEAN PATENT APPLICATION

(11) **EP 4 653 482 A1**
(43) Date of publication of application: **26.11.2025**
(21) Application number: 24744183.5
(22) Date of filing: 12.01.2024
(51) Int. Cl.: C08G 18/66, C08G 18/12, C08G 18/61, C08G 18/62, C08G 18/32, C08G 18/48, C08L 75/04, C09D 175/04, C08K 3/22

(54) **MODIFIED POLYURETHANE MATERIAL HAVING EXCELLENT RAIN EROSION RESISTANCE AND WEATHER RESISTANCE, PREPARATION METHOD THEREFOR, AND USE THEREOF**

(30) Priority: 18.01.2023 CN 202310061129
(71) Applicant: Zhuzhou Times New Material Technology Co., Ltd., Zhuzhou, Hunan 412000 (CN)
(72) Inventor: XU, Shuangxi, Zhuzhou, Hunan 412000 (CN); PENG, Chaoyi, Zhuzhou, Hunan 412000 (CN); FENG, Xingzhuo, Zhuzhou, Hunan 412000 (CN); CAO, Yanhai, Zhuzhou, Hunan 412000 (CN); ZHANG, Jianqiang, Zhuzhou, Hunan 412000 (CN); ZHU, Jun, Zhuzhou, Hunan 412000 (CN); YAO, Chunyong, Zhuzhou, Hunan 412000 (CN); YUAN, Xiaxin, Zhuzhou, Hunan 412000 (CN)
(74) Representative: Kovári, Zoltán
(86) International application number: PCT/CN2024/072056
(87) International publication number: WO 2024/153007

(57) **Abstract**

The present disclosure provides a modified polyurethane material with excellent rain erosion resistance and weather resistance, and a preparation method and use thereof. The modified polyurethane material is prepared through a prepolymer method as follows: adding a component A and a component B to a closed container capable of being vacuumed, and mixing to allow a reaction. In the present disclosure, a hydroxyl-terminated liquid fluoro rubber and a hydroxyl-terminated silane are adopted as modification materials to introduce silicon-containing and fluorine-containing materials into polyurethane. In addition, a filler and a corresponding additive are added, and physical cross-linking points are formed from the filler to further adsorb hydroxyl-terminated silicon/fluorine, so as to produce a homogeneous material. The present disclosure avoids the problem that the poor compatibility between organosilicon or organofluorine and polyurethane causes the phenomena such as migration of organosilicon or organofluorine to a surface and layering to make a material have poor homogeneity, and thus leads to the modified polyurethane material with excellent rain erosion resistance and weather resistance.

## Description

### TECHNICAL FIELD

The present disclosure belongs to the technical field of organic polymer materials and preparation thereof, and in particular relates to a modified polyurethane material with excellent rain erosion resistance and weather resistance, and a preparation method and use thereof.

### BACKGROUND

The development of large-scale blades has led to the problem of leading edge protection. The wind shear components of blades are mainly leading edges. When a blade runs at a high speed, a speed of a blade tip generally exceeds 90 m/s, and when raindrops hit a surface of the blade tip, a high pressure can be produced (an impact pressure of 1 mm to 3 mm raindrops can reach 120 MPa). Therefore, the blade tips are the most prone to corrosion. Currently, the common solution for the protection of leading edges of wind turbine blades is to brush a protective paint or paste a protective film on the leading edges of blades. Polyurethane materials have advantages such as high mechanical strength and excellent wear resistance, and are common materials for the protection of leading edges of blades. However, polyurethane materials have shortcomings such as poor rain erosion resistance, poor high-temperature and low-temperature resistance, and poor weather resistance. Thus, when used as the protective materials for leading edges of blades, polyurethane materials generally will fail after working in the wind fields with harsh conditions for 3 to 5 years, resulting in the loss of protection for the leading edges of blades and the corrosion of the leading edges of blades. After leading edges of wind turbine blades undergo corrosion, the aerodynamic performance of the wind turbine blades will be degraded, which will affect the power generation performance. The severe corrosion of leading edges may lead to an annual power output loss of higher than 25%. Moreover, this destruction will be aggravated over time, and the accidental damage or even accidents may occur at any time, which will eventually bring huge economic losses to wind power operators. Therefore, it is currently an urgent technical problem to develop protective materials with excellent rain erosion resistance and weather resistance for leading edges and prolong the life spans of protective materials for blades.

Polysiloxanes are a class of polymers in which repeated silicon-oxygen bonds serve as a main chain and organic groups are directly linked to silicon atoms. Polysiloxanes have advantages such as low-temperature flexibility, small surface tension, excellent biocompatibility, and prominent thermal stability. Fluorine-containing materials include fluorine atoms with high electronegativity and small atomic radii, and have high C-F bond energy, which endow the fluorine-containing polymers with excellent thermal oxidation resistance and photostability. Therefore, the introduction of a silicon/fluorine-containing material into polyurethane through copolymerization or blending to improve the weather resistance and the high-temperature and low-temperature resistance of polyurethane is a current research direction. However, due to the poor compatibility between organosilicon or organofluorine and polyurethane, there are phenomena such as migration to surfaces and layering, and it is difficult to prepare materials with excellent homogeneity. The Chinese invention patent CN106146797A discloses a synthesis method of a hydroxyl-terminated liquid fluoro rubber-modified polyurethane material with a gradient modulus. The Chinese invention patent CN113121788A discloses high-strength and high-toughness fluorine-containing polyurethane and a preparation method thereof. In the above patent, a polyurethane material is modified with a hydroxyl-terminated liquid fluoro rubber, but the modification is conducted in a solvent and a reaction process is complicated.

### SUMMARY

In order to overcome the problems in the prior art, the present disclosure provides a modified polyurethane material with excellent rain erosion resistance and weather resistance, and a preparation method and use thereof. The preparation method involves simple preparation steps. The modified polyurethane material has strong rain erosion resistance and ultraviolet aging resistance.

In order to solve the above technical problems, the present disclosure provides the following technical solutions:
A first aspect of the present disclosure provides a modified polyurethane material with excellent rain erosion resistance and weather resistance, where the modified polyurethane material is prepared through a prepolymer method as follows: in parts by mass, adding 90 parts to 95 parts of a component A and 5 parts to 10 parts of a component B to a closed container capable of being vacuumed, and mixing to allow a reaction; the component A is a mixture of 5 parts to 8 parts of a hydroxyl-terminated polysiloxane slurry, 4 parts to 5 parts of a hydroxyl-terminated fluoro rubber slurry, 55 parts to 61 parts of a hydroxyl-terminated polyol, and 25 parts to 35 parts of a polyisocyanate; the component B is a mixture of 3 parts to 11 parts of a chain extender and 2 parts to 4 parts of an additive;
the hydroxyl-terminated polysiloxane slurry is prepared from the following raw materials in parts by mass: a hydroxyl-terminated silane: 50 parts to 60 parts, a filler: 30 parts to 40 parts, a thickening agent: 2 parts to 3 parts, a compatibilizer: 1 part to 5 parts, and a homogenizing agent: 1 part to 5 parts;
the hydroxyl-terminated fluoro rubber slurry is prepared from the following raw materials in parts by mass: a hydroxyl-terminated liquid fluoro rubber: 50 parts to 55 parts, a filler: 35 parts to 45 parts, a thickening agent: 3 parts to 5 parts, a compatibilizer: 2 parts to 10 parts, and a homogenizing agent: 1 part to 5 parts; and
the filler is one or two selected from the group consisting of titanium dioxide and silicon dioxide.

In the present disclosure, both a hydroxyl-terminated siloxane polymer and a hydroxyl-terminated fluorine-containing polymer are introduced into a polyurethane material. The hydroxyl-terminated siloxane polymer has excellent flexibility, a small surface tension, and prominent thermal stability. The hydroxyl-terminated fluorine-containing polymer includes fluorine atoms with high electronegativity and small atomic radii, and has high C-F bond energy. Thus, the hydroxyl-terminated fluorine-containing polymer has excellent thermal oxidation resistance and photostability. The introduction of both the hydroxyl-terminated siloxane polymer and the hydroxyl-terminated fluorine-containing polymer can improve the temperature resistance and photostability of the polyurethane material, thereby improving the aging resistance of the polyurethane material.

In the present disclosure, when the hydroxyl-terminated polysiloxane slurry and the hydroxyl-terminated fluoro rubber slurry are prepared, a filler of titanium dioxide and/or silicon dioxide, the thickening agent, the compatibilizer, and the homogenizing agent are added, and on the basis of chemically modifying a polyurethane material with fluorine or silicon, physical cross-linking points are formed from the filler to further adsorb hydroxyl-terminated silicon/fluorine, so as to produce a homogeneous material. The present disclosure avoids the problem that the poor compatibility between organosilicon or organofluorine and polyurethane causes the phenomena such as migration of organosilicon or organofluorine to a surface and layering to make a material have poor homogeneity.

In the present disclosure, titanium dioxide or silicon dioxide is adopted as a filler because the titanium dioxide and the silicon dioxide have appropriate particle sizes, are easily dispersed, and exhibit a small impact on the mechanical properties of a polyurethane material when added to the polyurethane material.

As an optional embodiment, in the modified polyurethane material provided by the present disclosure, the thickening agent is one selected from the group consisting of a coumarone resin, a rosin resin, and a C5 petroleum resin. In the embodiment of the present disclosure, in the modified polyurethane material provided by the present disclosure, the thickening agent is added to increase a viscosity of the whole system.

As an optional embodiment, in the modified polyurethane material provided by the present disclosure, the compatibilizer is one selected from the group consisting of stearic acid and tetrabutyl titanate. The stearic acid or the tetrabutyl titanate is added to improve the interfacial compatibility between the filler and the hydroxyl-terminated modification material.

As an optional embodiment, in the modified polyurethane material provided by the present disclosure, the homogenizing agent is BYK410. The BYK410 is added to prevent the sedimentation and layering of the material and improve the homogeneity of the material.

As an optional embodiment, in the modified polyurethane material provided by the present disclosure, the hydroxyl-terminated polyol is one or more selected from the group consisting of polytetrahydrofuran ether glycol, polypropylene oxide glycol, polyethylene butylene adipate glycol, polycaprolactone glycol, polyethylene adipate glycol, polyethylene-propylene adipate glycol, polydiglycol adipate glycol, poly(1,4-butylene adipate), polyneopentylene-hexamethylene adipate glycol, and polycarbonate diol.

As an optional embodiment, in the modified polyurethane material provided by the present disclosure, the polyisocyanate is one or more selected from the group consisting of diphenylmethane-4,4'-diisocyanate, carbodiimide-modified diphenylmethane diisocyanate (MDI), MDI-50, toluene diisocyanate, 3,3'-dimethylbiphenyl diisocyanate, p-phenylene diisocyanate, and hydrogenated MDI.

As an optional embodiment, in the modified polyurethane material provided by the present disclosure, the chain extender is one or more selected from the group consisting of 1,4-butanediol, 1,3-butanediol, ethylene glycol, and 1,6-hexanediol.

As an optional embodiment, in the modified polyurethane material provided by the present disclosure, the additive is a mixture of an antioxidant, an ultraviolet absorbent, and a catalyst.

As an optional embodiment, in the modified polyurethane material provided by the present disclosure, the antioxidant is an antioxidant 1135.

As an optional embodiment, in the modified polyurethane material provided by the present disclosure, the ultraviolet absorbent is UV571.

As an optional embodiment, in the modified polyurethane material provided by the present disclosure, the catalyst is a catalyst A33.

A second aspect of the present disclosure provides a preparation method of the modified polyurethane material, including the following steps:
S1, preparation of the hydroxyl-terminated polysiloxane slurry: mixing the hydroxyl-terminated silane, the filler, the thickening agent, the compatibilizer, and the homogenizing agent according to the parts by mass, and conducting a high-speed dispersion and then an ultrasonic oscillation to obtain a hydroxyl-terminated polysiloxane modifier;
S2, preparation of the hydroxyl-terminated fluoro rubber slurry: mixing the hydroxyl-terminated liquid fluoro rubber, the filler, the thickening agent, the compatibilizer, and the homogenizing agent according to the parts by mass, and conducting a high-speed dispersion and then an ultrasonic oscillation to obtain a hydroxyl-terminated fluoro rubber modifier;
S3, preparation of the component A: subjecting a mixture of the hydroxyl-terminated polysiloxane modifier prepared in the S1, the hydroxyl-terminated fluoro rubber modifier prepared in the S2, and the hydroxyl-terminated polyol to high-temperature vacuum dehydration, cooling, adding the polyisocyanate, and conducting a reaction to obtain the component A; and
S4, thoroughly mixing the chain extender and the additive to prepare the component B; preheating the component A and the component B separately to obtain a preheated component A and a preheated component B, respectively; and adding the preheated component A and the preheated component B to the closed container capable of being vacuumed, and mixing to allow the reaction.

As an optional embodiment, in the preparation method provided by the present disclosure, in the S1 and the S2, the high-speed dispersion is conducted for 1 h to 2 h by a high-speed disperser with a dispersion speed of 1,500 rpm/min to 2,000 rpm/min; and the ultrasonic oscillation is conducted for 0.5 h to 2 h with a frequency of 40 KHz to 60 KHz.

As an optional embodiment, in the preparation method provided by the present disclosure, in the S3, the high-temperature vacuum dehydration of the mixture of the hydroxyl-terminated polysiloxane modifier, the hydroxyl-terminated fluoro rubber modifier, and the hydroxyl-terminated polyol refers to keeping a vacuum degree of 0.09 MPa to 0.1 MPa at 100°C to 130°C for dehydration.

As an optional embodiment, in the preparation method provided by the present disclosure, in the S3, the cooling is conducted to 40°C to 60°C; and the reaction after the polyisocyanate is added is conducted at 80°C+5°C for 2 h to 3 h.

As an optional embodiment, in the preparation method provided by the present disclosure, in the S4, after the preheated component A and the preheated component B are added to the closed container capable of being vacuumed, vacuum degassing is conducted under stirring until bubbles are completely removed to obtain the modified polyurethane material.

A third aspect of the present disclosure provides a use of the modified polyurethane material with excellent rain erosion resistance and weather resistance described above in preparation of a preformed protective cover for a wind turbine blade.

The preformed protective cover for the wind turbine blade disclosed in the present disclosure is prepared by pouring the modified polyurethane material into a mold of the preformed protective cover for the wind turbine blade, then curing, and demolding. The mold includes a male die component with a similar external shape to a longitudinal edge of a leading edge of the wind turbine blade, and a female die component with a geometric shape that matches with, but is slightly larger than a geometric shape of the male die component. A final gap between the male die component and the female die component is less than or equal to 3 mm. After the male die component is assembled with the female die component and the modified polyurethane material is poured, demolding, vulcanization, and curing are conducted to obtain the preformed protective cover for the wind turbine blade. An inner side of the preformed protective cover can be firmly bonded with a leading edge of a blade through an adhesive, so as to allow a rain erosion-resistant effect.

Compared with the prior art, the present disclosure has the following beneficial effects:
(1) In the present disclosure, the introduction of both a hydroxyl-terminated siloxane polymer and a hydroxyl-terminated fluorine-containing polymer into a polyurethane material can improve the temperature resistance and photostability of the polyurethane material, thereby improving the aging resistance of the polyurethane material. A hydroxyl-terminated liquid fluoro rubber and a hydroxyl-terminated silane are adopted as modification materials to introduce silicon-containing and fluorine-containing materials into polyurethane. In addition, a filler and a corresponding additive are added, and physical cross-linking points are formed from the filler to further adsorb hydroxyl-terminated silicon/fluorine, so as to produce a homogeneous material. The present disclosure avoids the problem that the poor compatibility between organosilicon or organofluorine and polyurethane causes the phenomena such as migration of organosilicon or organofluorine to a surface and layering to make a material have poor homogeneity. The present disclosure adopts a solvent-free solution, where a filler and a corresponding additive are added to allow the polymerization of bodies.
(2) In the present disclosure, a modification material is mixed with a filler and a corresponding additive through the mechanical mixing and ultrasonic treatment to produce a high-concentration modification slurry, such that the modification material is cross-linked with the filler, which increases the compatibility between organosilicon or organofluorine and a polyurethane material. As a result, a polyurethane material finally prepared has excellent homogeneity, and does not undergo the phenomena such as migration of organosilicon or organofluorine to a surface and layering.

### DETAILED DESCRIPTION OF THE EMBODIMENTS

In order to facilitate the understanding of the present disclosure, the present disclosure is described in detail below in conjunction with the content of the specification and the preferred examples, but the protection scope of the present disclosure is not limited to the following specific examples.

Unless otherwise defined, all technical terms used hereinafter have the same meaning as commonly understood by those skilled in the art. The technical terms used herein are merely for the purpose of describing specific examples, and are not intended to limit the protection scope of the present disclosure.

Unless otherwise specified, various raw materials, reagents, instruments, devices, etc. used in the present disclosure can be purchased from the market or can be prepared by the existing methods.

### Example 1

A hydroxyl-terminated polysiloxane/hydroxyl-terminated liquid fluoro rubber blend-modified polyurethane material was provided.
(1) Preparation of a hydroxyl-terminated polysiloxane slurry: 50 g of a hydroxyl-terminated silane, 30 g of a titanium dioxide powder, 2 g of a coumarone resin, 1 g of stearic acid, and 1 g of BYK410 were weighed and added to a container, stirred by a high-speed disperser for 2 h, and then subjected to an ultrasonic oscillation for 1.5 h to obtain a high-concentration hydroxyl-terminated polysiloxane slurry.
(2) Preparation of a hydroxyl-terminated fluoro rubber slurry: 50 g of a hydroxyl-terminated liquid fluoro rubber, 35 g of a titanium dioxide powder, 3 g of a coumarone resin, 2 g of tetrabutyl titanate, and 1 g of BYK410 were weighed and added to a container, stirred by a high-speed disperser for 2 h, and then subjected to an ultrasonic oscillation for 2 h to obtain a high-concentration hydroxyl-terminated liquid fluoro rubber slurry.
(3) Prepolymer synthesis (preparation of a component A): 5 parts of the hydroxyl-terminated polysiloxane slurry, 4 parts of the hydroxyl-terminated liquid fluoro rubber slurry, and 55 parts of hydroxyl-terminated polytetrahydrofuran ether glycol were added to a three-necked flask, kept at a vacuum degree of 0.09 MPa to 0.1 MPa and 120°C for dehydration, and then cooled to 40°C. 25 parts of diphenylmethane-4,4'-diisocyanate were added, and a constant-temperature reaction was conducted at 80°C±5°C for 2 h to obtain a product. The product was cooled and discharged to obtain a terminal isocyanate prepolymer.
(4) Preparation of a component B: 5 parts of 1,4-butanediol with a moisture content of lower than or equal to 0.05%, 1.0 part of an antioxidant 1135, 0.5 part of an ultraviolet absorbent UV571, and 0.5 part of a catalyst A33 were thoroughly mixed.
(5) 90 parts of the component A and 7 parts of the component B were weighed, preheated to 70°C separately, mixed in a closed container capable of being vacuumed, subjected to vacuum degassing under stirring until bubbles were completely removed, and then taken out to obtain the modified polyurethane material. The modified polyurethane material was poured into a preforming mold with a temperature of 100°C. 1 h later, demolding and vulcanization were conducted. Then curing was conducted at 120°C for 16 h to obtain a preformed protective cover.

### Example 2

A hydroxyl-terminated polysiloxane/hydroxyl-terminated liquid fluoro rubber blend-modified polyurethane material was provided.
(1) Preparation of a hydroxyl-terminated polysiloxane slurry: 60 g of a hydroxyl-terminated silane, 40 g of a titanium dioxide powder, 3 g of a coumarone resin, 5 g of stearic acid, and 5 g of BYK410 were weighed and added to a container, stirred by a high-speed disperser for 1.5 h, and then subjected to an ultrasonic oscillation for 2 h to obtain a high-concentration hydroxyl-terminated polysiloxane slurry.
(2) Preparation of a hydroxyl-terminated fluoro rubber slurry: 55 g of a hydroxyl-terminated liquid fluoro rubber, 45 g of a titanium dioxide powder, 5 g of a coumarone resin, 10 g of tetrabutyl titanate, and 5 g of BYK410 were weighed and added to a container, stirred by a high-speed disperser for 1 h, and then subjected to an ultrasonic oscillation for 2 h to obtain a high-concentration hydroxyl-terminated liquid fluoro rubber slurry.
(3) Prepolymer synthesis (preparation of a component A): 8 parts of the hydroxyl-terminated polysiloxane slurry, 5 parts of the hydroxyl-terminated liquid fluoro rubber slurry, and 60 parts of hydroxyl-terminated polypropylene oxide glycol were added to a three-necked flask, kept at a vacuum degree of 0.09 MPa to 0.1 MPa and 110°C for dehydration, and then cooled to 50°C. 30 parts of diphenylmethane-4,4'-diisocyanate were added, and a constant-temperature reaction was conducted at 80°C±5°C for 3 h to obtain a product. The product was cooled and discharged to obtain a terminal isocyanate prepolymer.
(4) Preparation of a component B: 6 parts of 1,3-butanediol with a moisture content of lower than or equal to 0.05%, 1.0 part of an antioxidant 5057, 1.0 part of an ultraviolet absorbent UV-1130, and 0.6 part of a catalyst N-methylimidazole were thoroughly mixed.
(5) 95 parts of the component A and 10 parts of the component B were weighed, preheated to 65°C separately, mixed in a closed container capable of being vacuumed, subjected to vacuum degassing under stirring until bubbles were completely removed, and then taken out to obtain the modified polyurethane material. The modified polyurethane material was poured into a preforming mold with a temperature of 100°C. 1 h later, demolding and vulcanization were conducted. Then curing was conducted at 120°C for 16 h to obtain a preformed protective cover.

### Example 3

A hydroxyl-terminated polysiloxane/hydroxyl-terminated liquid fluoro rubber blend-modified polyurethane material was provided.
(1) Preparation of a hydroxyl-terminated polysiloxane slurry: 55 g of a hydroxyl-terminated silane, 35 g of a titanium dioxide powder, 2.5 g of a coumarone resin, 2.5 g of stearic acid, and 2.5 g of BYK410 were weighed and added to a container, stirred by a high-speed disperser for 1 h, and then subjected to an ultrasonic oscillation for 1 h to obtain a high-concentration hydroxyl-terminated polysiloxane slurry.
(2) Preparation of a hydroxyl-terminated fluoro rubber slurry: 52 g of a hydroxyl-terminated liquid fluoro rubber, 40 g of a titanium dioxide powder, 4.0 g of a coumarone resin, 6 g of tetrabutyl titanate, and 2.5 g of BYK410 were weighed and added to a container, stirred by a high-speed disperser for 1 h, and then subjected to an ultrasonic oscillation for 2 h to obtain a high-concentration hydroxyl-terminated liquid fluoro rubber slurry.
(3) Prepolymer synthesis (preparation of a component A): 7 parts of the hydroxyl-terminated polysiloxane slurry, 4.6 parts of the hydroxyl-terminated liquid fluoro rubber slurry, and 61 parts of hydroxyl-terminated polycaprolactone glycol were added to a three-necked flask, kept at a vacuum degree of 0.09 MPa to 0.1 MPa and 120°C for dehydration, and then cooled to 60°C. 35 parts of diphenylmethane-4,4'-diisocyanate were added, and a constant-temperature reaction was conducted at 80°C±5°C for 3 h to obtain a product. The product was cooled and discharged to obtain a terminal isocyanate prepolymer.
(4) Preparation of a component B: 8 parts of 1,3-butanediol with a moisture content of lower than or equal to 0.05%, 1.5 part of an antioxidant 264, 1.5 parts of an ultraviolet absorbent UV-1, and 0.5 part of a catalyst A33 were thoroughly mixed.
(5) 93 parts of the component A and 11 parts of the component B were weighed, preheated to 80°C separately, mixed in a closed container capable of being vacuumed, subjected to vacuum degassing under stirring until bubbles were completely removed, and then taken out to obtain the modified polyurethane material. The modified polyurethane material was poured into a preforming mold with a temperature of 100°C. 1 h later, demolding and vulcanization were conducted. Then curing was conducted at 120°C for 16 h to obtain a preformed protective cover.

### Comparative Example 1

A filler-free modified polyurethane material was provided.
(1) A hydroxyl-terminated silane was prepared.
(2) A hydroxyl-terminated liquid fluoro rubber was prepared.
(3) Prepolymer synthesis (preparation of a component A): 3 parts of the hydroxyl-terminated polysiloxane slurry, 2.3 parts of the hydroxyl-terminated liquid fluoro rubber slurry, and 55 parts of hydroxyl-terminated polytetrahydrofuran ether glycol were added to a three-necked flask, kept at a vacuum degree of 0.09 MPa to 0.1 MPa and 120°C for dehydration, and then cooled to 40°C. 25 parts of diphenylmethane-4,4'-diisocyanate were added, and a constant-temperature reaction was conducted at 80°C±5°C for 2 h to obtain a product. The product was cooled and discharged to obtain a terminal isocyanate prepolymer.
(4) Preparation of a component B: 5 parts of 1,3-butanediol with a moisture content of lower than or equal to 0.05%, 1.0 part of an antioxidant 1135, 0.5 part of an ultraviolet absorbent UV571, and 0.5 part of a catalyst A33 were thoroughly mixed.
(5) 90 parts of the component A and 7 parts of the component B were weighed, preheated to 65°C separately, mixed in a closed container capable of being vacuumed, subjected to vacuum degassing under stirring until bubbles were completely removed, and then taken out to obtain the modified polyurethane material. The modified polyurethane material was poured into a preforming mold with a temperature of 100°C. 1 h later, demolding and vulcanization were conducted. Then curing was conducted at 120°C for 16 h to obtain a preformed protective cover.

### Comparative Example 2

A conventional polyurethane material was prepared.
(1) Prepolymer synthesis (preparation of a component A): 60 parts of polytetrahydrofuran ether glycol were added to a three-necked flask, kept at a vacuum degree of 0.09 MPa to 0.1 MPa and 120°C for dehydration, and then cooled to 50°C. 25 parts of diphenylmethane-4,4'-diisocyanate were added, and a constant-temperature reaction was conducted at 80°C±5°C for 2 h to obtain a product. The product was cooled and discharged to obtain a terminal isocyanate prepolymer.
(2) Preparation of a component B: 5 parts of 1,4-butanediol with a moisture content of lower than or equal to 0.05%, 1.0 part of an antioxidant 1135, 0.4 part of an ultraviolet absorbent UV571, and 0.6 part of a catalyst A33 were thoroughly mixed.
(3) 90 parts of the component A and 7 parts of the component B were weighed, preheated to 65°C separately, mixed in a closed container capable of being vacuumed, subjected to vacuum degassing under stirring until bubbles were completely removed, and then taken out to obtain a mixed material. The mixed material was poured into a preforming mold with a temperature of 100°C. 1 h later, demolding and vulcanization were conducted. Then curing was conducted at 120°C for 16 h to obtain a preformed protective cover.

### Performance test

The preformed protective covers prepared from the modified polyurethane materials in Examples 1 to 3 and Comparative Example 1 and the preformed protective cover prepared from the conventional polyurethane material in Comparative Example 2 each were subjected to performance tests, and test items, test standards, and data were shown in Table 1 below.

**Table 1 Performance test results of the examples and comparative examples**

| Test item | Test standard | Comparative Example 2 | Comparative Example 1 | Example 1 | Example 2 | Example 3 |
|---|---|---|---|---|---|---|
| Water resistance within 240 h | GB/T 1733-1993 | No change | No change | No change | No change | No change |
| Ultraviolet aging resistance within 2,000 h | GB/T 14522 | Performance attenuation ratio: 40% | Performance attenuation ratio: 30% | Performance attenuation ratio: 10% | Performance attenuation ratio: 5% | Performance attenuation ratio: 8% |
| Tensile strength/MPa | GB/T 531 | 25.2 | 22.5 | 28.9 | 30.5 | 33.6 |
| Contact angle/° | GB/T 23764-2009 | 90 | 110 | 100 | 95 | 97 |
| Rain erosion resistance | ASTM G73 | 5-20h | 25h | 50h | 60h | 55h |

It can be seen from Table 1 that, in Examples 1 to 3, after a polyurethane material is modified with a hydroxyl-terminated polysiloxane/hydroxyl-terminated liquid fluoro rubber blend, an attenuation ratio of ultraviolet aging resistance is reduced and a time of rain erosion resistance is greatly increased. Compared with the filler-free modified polyurethane material in Comparative Example 1, the modified polyurethane materials in Examples 1 to 3 have a significantly-increased tensile strength and a significantly-reduced contact angle, indicating that the modified polyurethane materials prepared in Examples 1 to 3 are homogeneous. After the polyurethane material is modified with the blend, the homogeneity is enhanced, and the phenomenon of migration of organosilicon and organofluorine outwards is improved. Therefore, a contact angle is reduced, and a tensile strength is slightly enhanced. The conventional polyurethane material prepared in Comparative Example 2 has a small contact angle, but exhibits weaker ultraviolet aging resistance, tensile strength, and rain erosion resistance than the modified polyurethane materials in Examples 1 to 3.

The present disclosure is described in further detail above with reference to the specific preferred implementations, but the description should not be construed as a limitation to the specific implementation of the present disclosure. Those of ordinary skill in the art of the present disclosure can further make several simple deductions or substitutions without departing from the conception of the present disclosure, and all such deductions or substitutions shall be regarded as falling within the protection scope of the present disclosure.

## Claims

1. A modified polyurethane material with excellent rain erosion resistance and weather resistance, wherein the modified polyurethane material is prepared through a prepolymer method by adding, in parts by mass, 90 parts to 95 parts of a component A and 5 parts to 10 parts of a component B to a closed container capable of being vacuumed, and mixing to allow a reaction; the component A is a mixture of 5 parts to 8 parts of a hydroxyl-terminated polysiloxane slurry, 4 parts to 5 parts of a hydroxyl-terminated fluoro rubber slurry, 55 parts to 61 parts of a hydroxyl-terminated polyol, and 25 parts to 35 parts of a polyisocyanate; the component B is a mixture of 3 parts to 11 parts of a chain extender and 2 parts to 4 parts of an additive;
the hydroxyl-terminated polysiloxane slurry is prepared from the following raw materials in parts by mass: a hydroxyl-terminated silane: 50 parts to 60 parts, a filler: 30 parts to 40 parts, a thickening agent: 2 parts to 3 parts, a compatibilizer: 1 part to 5 parts, and a homogenizing agent: 1 part to 5 parts;
the hydroxyl-terminated fluoro rubber slurry is prepared from the following raw materials in parts by mass: a hydroxyl-terminated liquid fluoro rubber: 50 parts to 55 parts, a filler: 35 parts to 45 parts, a thickening agent: 3 parts to 5 parts, a compatibilizer: 2 parts to 10 parts, and a homogenizing agent: 1 part to 5 parts; and
the filler is one or two selected from the group consisting of titanium dioxide and silicon dioxide.

2. The modified polyurethane material with excellent rain erosion resistance and weather resistance according to claim 1, wherein the thickening agent is one selected from the group consisting of a coumarone resin, a rosin resin, and a C5 petroleum resin; the compatibilizer is one selected from the group consisting of stearic acid and tetrabutyl titanate, and the homogenizing agent is BYK410.

3. The modified polyurethane material with excellent rain erosion resistance and weather resistance according to claim 1, wherein the hydroxyl-terminated polyol is one or more selected from the group consisting of polytetrahydrofuran ether glycol, polypropylene oxide glycol, polyethylene butylene adipate glycol, polycaprolactone glycol, polyethylene adipate glycol, polyethylene-propylene adipate glycol, polydiglycol adipate glycol, poly(1,4-butylene adipate), polyneopentylene-hexamethylene adipate glycol, and polycarbonate diol; and the polyisocyanate is one or more selected from the group consisting of diphenylmethane-4,4'-diisocyanate, carbodiimide-modified diphenylmethane diisocyanate (MDI), MDI-50, toluene diisocyanate, 3,3'-dimethylbiphenyl diisocyanate, p-phenylene diisocyanate, and hydrogenated MDI.

4. The modified polyurethane material with excellent rain erosion resistance and weather resistance according to claim 1, wherein the chain extender is one or more selected from the group consisting of 1,4-butanediol, 1,3-butanediol, ethylene glycol, and 1,6-hexanediol.

5. The modified polyurethane material with excellent rain erosion resistance and weather resistance according to claim 1, wherein the additive is a mixture of an antioxidant, an ultraviolet absorbent, and a catalyst; the antioxidant is one selected from the group consisting of an antioxidant 1135, an antioxidant 5057, and an antioxidant 264; the ultraviolet absorbent is one selected from the group consisting of UV571, UV-1, and UV-1130; and the catalyst is one selected from the group consisting of a catalyst A33, N-methylimidazole, zinc isooctanoate, and bismuth isooctanoate.

6. A preparation method of the modified polyurethane material with excellent rain erosion resistance and weather resistance according to any one of claims 1 to 5, comprising the following steps:
S1, preparation of the hydroxyl-terminated polysiloxane slurry: mixing the hydroxyl-terminated silane, the filler, the thickening agent, the compatibilizer, and the homogenizing agent according to the parts by mass, and conducting a high-speed dispersion and then an ultrasonic oscillation to obtain a hydroxyl-terminated polysiloxane modifier;
S2, preparation of the hydroxyl-terminated fluoro rubber slurry: mixing the hydroxyl-terminated liquid fluoro rubber, the filler, the thickening agent, the compatibilizer, and the homogenizing agent according to the parts by mass, and conducting a high-speed dispersion and then an ultrasonic oscillation to obtain a hydroxyl-terminated fluoro rubber modifier;
S3, preparation of the component A: subjecting a mixture of the hydroxyl-terminated polysiloxane modifier prepared in the S1, the hydroxyl-terminated fluoro rubber modifier prepared in the S2, and the hydroxyl-terminated polyol to high-temperature vacuum dehydration, cooling, adding the polyisocyanate, and conducting a reaction to obtain the component A; and
S4, thoroughly mixing the chain extender and the additive to prepare the component B; preheating the component A and the component B separately to obtain a preheated component A and a preheated component B, respectively; and adding the preheated component A and the preheated component B to the closed container capable of being vacuumed, and mixing to allow the reaction.

7. The preparation method of the modified polyurethane material with excellent rain erosion resistance and weather resistance according to claim 6, wherein in the S1 and the S2, the high-speed dispersion is conducted for 1 h to 2 h by a high-speed disperser with a dispersion speed of 1,500 rpm/min to 2,000 rpm/min; and the ultrasonic oscillation is conducted for 0.5 h to 2 h with a frequency of 40 KHz to 60 KHz.

8. The preparation method of the modified polyurethane material with excellent rain erosion resistance and weather resistance according to claim 6, wherein in the S3, the high-temperature vacuum dehydration of the mixture of the hydroxyl-terminated polysiloxane modifier, the hydroxyl-terminated fluoro rubber modifier, and the hydroxyl-terminated polyol refers to keeping a vacuum degree of 0.09 MPa to 0.1 MPa at 100°C to 130°C for dehydration; the cooling is conducted to 40°C to 60°C; and the reaction after the polyisocyanate is added is conducted at 80°C±5°C for 2 h to 3 h.

9. The preparation method of the modified polyurethane material with excellent rain erosion resistance and weather resistance according to claim 6, wherein in the S4, after the preheated component A and the preheated component B are added to the closed container capable of being vacuumed, vacuum degassing is conducted under stirring until bubbles are completely removed to obtain the modified polyurethane material.

10. A use of the modified polyurethane material with excellent rain erosion resistance and weather resistance according to any one of claims 1 to 5 in preparation of a preformed protective cover for a wind turbine blade.
